**Europäisches Patentamt**

**European Patent Office**

**Office européen des brevets**

(19)

(11) Veröffentlichungsnummer : **0 555 181 A1**

# (12) EUROPÄISCHE PATENTANMELDUNG

(21) Anmeldenummer : **93810056.7**

(22) Anmeldetag : **27.01.93**

(51) Int. Cl.$^5$ : **C08G 59/06**

(30) Priorität : **05.02.92 CH 324/92**

(43) Veröffentlichungstag der Anmeldung :
**11.08.93 Patentblatt 93/32**

(84) Benannte Vertragsstaaten :
**CH DE ES FR GB IT LI NL**

(71) Anmelder : **CIBA-GEIGY AG**
**Klybeckstrasse 141**
**CH-4002 Basel (CH)**

(72) Erfinder : **Hofer, Arnold, Dr.**
**Langmattstrasse 5**
**CH-4132 Muttenz (CH)**
Erfinder : **Schneider, Hildegard, Dr.**
**Schlossstrasse 28**
**W-7853 Steinen (DE)**

(54) **Lagerstabile vorverlängerte Epoxidharze.**

(57)    Zusammensetzungen enthaltend
   (a) ein bei Raumtemperatur flüssiges Epoxidharz enthaltend durchschnittlich mehr als eine Epoxidgruppe pro Molekül,
   (b) eine aromatische Dihydroxyverbindung,
   (c) einen Vorverlängerungskatalysator und
   (d) 7-15 Gew.-%, bezogen auf die Gesamtzusammensetzung, eines flüssigen Ketons oder eines
flüssigen aromatischen Kohlenwasserstoffs mit einem Siedepunkt zwischen 125 °C und 200 °C,
liefern nach Erhitzen auf 160-200 °C lagerstabile, feste vorverlängerte Epoxidharze, die sich insbesondere zur Herstellung von Oberflächenbeschichtungen eignen.

Die vorliegende Erfindung betrifft Epoxidharzzusammensetzungen enthaltend geringe Mengen eines Lösungsmittels sowie die daraus erhältlichen vorverlängerten Epoxidharze und deren Verwendung zur Herstellung von Formstoffen und Beschichtungen.

Unter Vorverlängerung von Epoxidharzen versteht man im allgemeinen eine durch Umsetzung eines Epoxidharzes mit einer Dihydroxyverbindung bewirkte Kettenverlängerung.

In den US-Patenten 4,885,354, 4,973,648 und 5,006,626 werden vorverlängerte Epoxidharze mit niedriger Viskosität und hoher Temperaturbeständigkeit beschrieben, die durch Umsetzung von flüssigen Epoxidharzen mit aromatischen Dihydroxyverbindungen in Gegenwart von spezifischen Vorverlängerungskatalysatoren erhalten werden. Niedermolekulare Harze dieses Typs werden nach beendeter Vorverlängerungsreaktion als Schmelze aus dem Reaktionsgefäss ausgegossen und nach dem Abkühlen in Stücke zerkleinert. Höhermolekulare Harze werden nach der Vorverlängerungsreaktion in einem Lösungsmittel aufgenommen und aus dem Reaktor entfernt. Solche Harze werden als ca. 30-40 Gew.-%ige Lösungen gelagert und transportiert, mit den bekannten ökonomischen und ökologischen Nachteilen und Sicherheitsrisiken (Brennbarkeit). Ausserdem können die bekannten vorverlängerten Harze auf Basis von höhermolekularen Epoxidharzen nur in relativ kleinen Ansätzen hergestellt werden, da aufgrund deren hohen Viskosität Probleme beim Rühren des Gemisches auftreten.

Es wurde nun gefunden, dass durch Zusatz einer geringen Menge eines spezifischen Lösungsmittels feste vorverlängerte Epoxidharze mit niedriger Rührviskosität erhalten werden, welche die oben angesprochenen Nachteile nicht aufweisen.

Der Lösungsmittelzusatz bewirkt eine Viskositätserniedrigung und gewährleistet einen gleichmässigen Abtransport der Reaktionswärme, da das Lösungsmittel bei der hohen Reaktionstemperatur refluxiert. Die so garantierte bessere Rührwirkung ermöglicht auch bei höhermolekularen Basisharzen Ansätze in grösserem Massstab.

Ein auf diese Weise hergestelltes vorverlängertes Harz zeigt überraschenderweise beim Lagertest keine oder nur eine geringfügige Tendenz zum Zusammenbacken und kann daher problemlos als Feststoff gelagert und transportiert werden.

Gegenstand der vorliegenden Erfindung sind Zusammensetzungen enthaltend

(a) ein Epoxidharz enthaltend durchschnittlich mehr als eine Epoxidgruppe pro Molekül,

(b) eine aromatische Dihydroxyverbindung,

(c) einen Vorverlängerungskatalysator und

(d) 7-15 Gew.-%, bezogen auf die Gesamtzusammensetzung, eines flüssigen Ketons oder eines flüssigen aromatischen Kohlenwasserstoffs mit einem Siedepunkt zwischen 125 °C und 200 °C.

Als Komponente (a) können im Prinzip alle dem Fachmann bekannten Epoxidharze eingesetzt werden, sofern sie durchschnittlich mehr als eine Epoxidgruppe pro Molekül enthalten.

Vor allem kommen solche Epoxidverbindungen in Frage, deren Molekulargewicht relativ niedrig ist, vorzugsweise kleiner als 3500, insbesondere kleiner als 2000 und besonders bevorzugt zwischen 175 und 1800.

Bei den vorzugsweise verwendeten Diglycidylverbindungen kann es sich um Ether oder Ester handeln; ferner können die Glycidylgruppen auch an Stickstoffatome geknüpft sein. Als Phenole, welche den Ethern zugrunde liegen, sind beispielsweise die folgenden zu nennen: einkernige Diphenole, wie beispielsweise Resorcin oder Hydrochinon, Naphthaline mit zwei Hydroxylgruppen, wie 1,4-Dihydroxynaphthalin, Biphenyle und andere zweikernige aromatische Verbindungen, die eine Methylen-, Isopropyliden-, -O-, -S-, -SO- oder -SO$_2$-Brücke aufweisen und zwei Hydroxylgruppen an den aromatischen Kernen gebunden enthalten, wie insbesondere Bisphenol A, Bisphenol F oder Bisphenol S, wobei die Benzolkerne auch Halogenatome aufweisen können, wie Tetrabrombisphenol A.

Andere geeignete Glycidylverbindungen sind Ether von Diolen, wie 1,4-Butandioldiglycidylether, 1,6-Hexandioldiglycidylether oder Diglykoldiglycidylether. Als Basis für die Glycidylester dienen beispielsweise Phthalsäure, Terephthalsäure, Adipinsäure, Trimethyladipinsäure oder Sebazinsäure.

Dabei handelt es sich um bekannte und grösstenteils kommerziell erhältliche Produkte.

Vorzugsweise wird als Komponente (a) der erfindungsgemässen Zusammensetzungen ein Diglycidylether eines Bisphenols verwendet.

Besonders bevorzugt ist Bisphenol A-diglycidylether.

Als Komponente (b) können grundsätzlich alle in der Methodik der Vorverlängerung bekannten aromatischen Dihydroxyverbindungen eingesetzt werden. Als Beispiele seien genannt: einkernige Diphenole, wie Resorcin oder Hydrochinon, Naphthaline mit zwei Hydroxylgruppen, wie 1,4-Dihydroxynaphthalin, Biphenyle und andere zweikernige aromatische Verbindungen, die eine Methylen-, Isopropyliden-, -O-, -S-, -SO- oder -SO$_2$-Brücke aufweisen und zwei Hydroxylgruppen an den aromatischen Kernen gebunden enthalten, wie insbesondere Bisphenol A, Bisphenol F oder Bisphenol S, wobei die Benzolkerne auch Halogenatome aufweisen können, wie Tetrabrombisphenol A.

Vorzugsweise wird als Komponente (b) ein Bisphenol verwendet.

Besonders bevorzugt ist Bisphenol A.

Die Menge der in den erfindungsgemässen Zusammensetzungen enthaltenen Komponente (b) kann in weiten Bereichen variieren und hängt vor allem von den gewünschten Eigenschaften des vorverlängerten Harzes ab. Je grösser die Menge der eingesetzten Dihydroxyverbindung ist, desto höher ist im allgemeinen das Molekulargewicht und der Schmelzpunkt des Endprodukts.

Vorzugsweise wird die Komponente (b) in einer solchen Menge eingesetzt, dass auf ein Epoxidäquivalent der Komponente (a) 0,6-1,2 OH-Gruppenäquivalente entfallen.

Besonders bevorzugt werden pro Epoxidäquivalent der Komponente (a) 0,8-1,1, insbesondere 0,9-1,0, OH-Gruppenäquivalente eingesetzt.

Als Komponente (c) können ebenfalls alle dem Fachmann als Vorverlängerüngskatalysatoren (AVA-Katalysatoren) für Epoxidharze bekannten Verbindungen eingesetzt werden.

Vorzugsweise werden sekundäre oder tertiäre Amine oder quartäre Ammoniumsalze verwendet.

Beispiele dafür sind aliphatische, cycloaliphatische oder aromatische sekundäre und tertiäre Amine, wie Di-n-butylamin, Triethylamin, Tri-n-butylamin, N,N-Dimethylcyclohexylamin und N,N-Dimethylanilin, heterozyklische Amine, wie Piperidin, N-Methylpiperidin, N-Methylmorpholin, N-Methylpyrrolidin, 2-Phenylimidazol und 2-Ethylimidazol.

Geeignete quartäre Ammoniumsalze sind z.B. die in dem US-Patent 4,465,722 erwähnten Tetraalkylammoniumhydroxide und -halogenide sowie die in den US-Patenten 4,885,354, 4,973,648 und 5,006,626 beschriebenen Piperidinium-, Morpholinium- und Pyrrolidiniumsalze, wie beispielsweise:

Tetramethylammoniumchlorid, Tetrabutylammoniumbromid, N,N-Dimethylpyrrolidiniumchlorid, N-Ethyl-N-methylpyrrolidiniumiodid, N-Butyl-N-methylpyrrolidiniumbromid, N-Benzyl-N-methylpyrrolidiniumchlorid, N-Alkyl-N-methylpyrrolidiniumbromid, N-Butyl-N-methylmorpholiniumbromid, N-Butyl-N-methylmorpholiniumiodid, N-Ethyl-N-hydroxyethylmorpholiniumiodid, N-Allyl-N-methylmorpholiniumbromid, N-Methyl-N-benzylpiperidiniumchlorid, N-Methyl-N-benzylpiperidiniumbromid, N,N-Dimethylpiperidiniumiodid, N-Methyl-N-ethylpiperidiniumacetat oder N-Methyl-N-ethylpiperidiniumiodid.

Vorzugsweise wird als Komponente (c) ein Dialkylpiperidiniumsalz, Dialkylpyrrolidiniumsalz, Dialkylmorpholiniumsalz, N-Alkylmorpholin, N-Alkylpiperidin, N-Alkylpyrrolidin oder ein alkyl- oder arylsubstituiertes Imidazol verwendet.

Besonders bevorzugte Vorverlängerungskatalysatoren sind N-Ethyl-N-Methylpiperidiniumiodid und 2-Phenylimidazol.

Die Komponente (c) wird in katalytisch wirksamen Mengen eingesetzt, z.B. in einer Menge von etwa 10-6000 ppm, vorzugsweise 20-4000 ppm und besonders bevorzugt 50-1200 ppm, bezogen auf das Gewicht des Basisharzes (Komponente a).

Als Komponente (d) kann im Prinzip jedes aliphatische oder cycloaliphatische Keton eingesetzt werden, sofern es einen Siedepunkt zwischen 125 °C und 170 °C aufweist.

Beispiele dafür sind Methylisobutylketon, Diisobutylketon, 2,4-Dimethyl-6-heptanon, 2-Heptanon, 3-Heptanon, Cyclopentanon, Methylcyclopentanon, Cyclohexanon und Methylcyclohexanon.

Aromatische Kohlenwasserstoffe mit einem Siedepunkt zwischen 125 °C und 170 °C, wie beispielsweise Xylol oder Mesitylen, sind ebenfalls als Komponente (d) geeignet.

Vorzugsweise wird als Komponente (d) Cyclohexanon, Methylcyclohexanon, Cyclopentanon, Methylcyclopentanon, Diisobutylketon, Methylisobutylketon oder Mesitylen eingesetzt.

Besonders bevorzugt ist Cyclohexanon.

Vorzugsweise wird das Lösungsmittel (d) in Mengen von 8-12 Gew.-%, insbesondere 9-11 Gew.-%, bezogen auf die Gesamtzusammensetzung, eingesetzt.

Zweckmässig können auch Gemische von verschiedenen Lösungsmitteln verwendet werden.

Einen weiteren Erfindungsgegenstand bildet ein Verfahren zum Vorverlängern eines bei Raumtemperatur flüssigen Epoxidharzes, dadurch gekennzeichnet, dass man eine Zusammensetzung enthaltend

(a) ein bei Raumtemperatur flüssiges Epoxidharz enthaltend durchschnittlich mehr als eine Epoxidgruppe pro Molekül,

(b) eine aromatische Dihydroxyverbindung,

(c) einen Vorverlängerungskatalysator und

(d) 7-15 Gew.-%, bezogen auf die Gesamtzusammensetzung, eines flüssigen Ketons oder eines flüssigen aromatischen Kohlenwasserstoffs mit einem Siedepunkt zwischen 125 °C und 200 °C,

auf 160-200 °C erhitzt, bis der Epoxidgehalt des Harzes 0,05-0,35 val/kg beträgt.

Die Umsetzung wird vorzugsweise unter Normaldruck und bei Temperaturen zwischen 165 °C und 190 °C, insbesondere zwischen 170 °C und 185 °C, durchgeführt.

Bei den hohen Reaktionstemperaturen refluxiert das Lösungsmittel, wodurch gewährleistet wird, dass die Reaktionswärme gleichmässig abgeführt wird. Ausserdem wird durch den Lösungsmittelgehalt eine bessere Rührwirkung erreicht, vor allem bei höherviskosen Basisharzen.

Es ist dabei nicht erforderlich, die Gesamtlösungsmittelmenge vor der Vorverlängerungsreaktion zuzugeben. Befriedigende Resultate werden auch erhalten, wenn mindestens 50 % der vorgesehenen Gesamtlösungsmittelmenge (Komponente d) zu Beginn und der Rest nach Ende der Reaktion zugegeben werden (Tabelle 1). Ein solches Vorgehen ist vor allem sinnvoll, wenn zwei oder mehrere verschiedene Lösungsmittel verwendet werden. In einem solchen Fall empfiehlt es sich, das tiefersiedende Lösungsmittel erst nach beendeter Vorverlängerungsreaktion zuzugeben.

Die auf diese Weise hergestellten lösungsmittelhaltigen vorverlängerten Epoxidharze zeigen auch bei Lagerung unter Belastung keine oder nur eine geringe Tendenz zum Sintern und können daher problemlos als Feststoffe gelagert und transportiert werden.

Gegenstand der Erfindung ist auch ein festes vorverlängertes Epoxidharz mit einem Lösungsmittelgehalt von 7-15 Gew.-% erhätlich durch Erhitzen einer Zusammensetzung gemäss Anspruch 1 auf 160-200 °C bis der Epoxidgehalt des Harzes 0,05-0,35 val/kg beträgt oder durch Erhitzen einer Zusammensetzung enthaltend die Komponenten (a)-(c) gemäss Anspruch 1 und mindestens 50 % der vorgesehenen Gesamtlösungsmittelmenge auf 160-200 °C, bis der Epoxidgehalt des Harzes 0,05-0,35 val/kg beträgt und anschliessender Zugabe des restlichen Lösungsmittels.

Das oben beschriebene Verfahren, das dadurch gekennzeichnet ist, dass ein Epoxidharz, eine aromatische Dihydroxyverbindung und ein Vorverlängerungskatalysator in Gegenwart von 7-15 Gew.-% eines spezifischen Lösungsmittels auf 160-200 °C erhitzt wird, ist nicht nur zur Herstellung von festen lagerstabilen Epoxidharzen geeignet; es kann auch vorteilhaft zur Herstellung von Lösungen von vorverlängerten Epoxidharzen mit eingebauten Flexibilisatoren verwendet werden. Bei dieser Ausführungsform wird der weitaus grösste Anteil Lösungsmittel nach Beendigung der Vorverlängerungsreaktion zugegeben, so dass die resultierende Lösungen einen Polymergehalt von ca. 30-50 Gew.-% aufweisen. Überraschenderweise weisen die so hergestellten flexibilisierten Epoxidharze nur eine geringe Molekulargewichtsstreuung auf (Tabelle 2, Beispiele 13-24). Geeignete Flexibilisatoren sind dem Fachmann bekannt. Üblicherweise werden Diglycidylether von aliphatischen Diolen, wie beispielsweise 1,4-Butandioldiglycidylether und 1,6-Hexandioldiglycidylether, oder Diglycidylester von aliphatischen Dicarbonsäuren, wie z.B. Adipinsäurediglycidylester und Sebacinsäurediglycidylester, verwendet. Ferner können auch freie Dicarbonsäuren eingesetzt werden, wie beispielsweise Adipinsäure oder Sebacinsäure

Die erfindungsgemässen vorverlängerten Epoxidharze können mit den üblichen Härtungsmitteln, wie Formaldehydharzen, Polycarbonsäuren, Polycarbonsäureanhydriden und Polycarbonsäureestern, unter Bildung von Beschichtungen ausgehärtet werden.

Geeignete Härter dieses Typs sind beispielsweise Phthalsäureanhydrid, Tetrahydro- oder Hexahydrophthalsäureanhydrid und Trimellitsäureanhydrid, sowie die zu den oben genannten Anhydriden gehörenden Säuren und insbesondere die davon abgeleiteten Polyester.

Besonders geeignete Härter sind Harnstoff-, Melamin- Benzoguanamin- und PhenolFormaldehydharze, wie beispielsweise butyliertes Bisphenol-A-Formaldehydharz. Die erfindungsgemäss vorverlängerten Epoxidharze können aufgrund der bei der Vorverlängerung im Molekül entsäntdenen Hydroxylgruppen auch mit Di- oder Polyisocyanaten unter Bildung von Formstoffen oder Beschichtungen ausgehärtet werden Als Di- oder Polyisocyanate können dabei beispielsweise Hexamethylen-1,6-diisocyanat, 2,6-Diisocyanatohexansäuremethylester, 1-Methyl-2,4-diisocyanatohexan, 2,2,4-Trimethyl-1,6-diisocyanatohexan, 1-Isocyanato-3,5,5-trimethyl-5-isocyanatomethylcyclohexan (Isophorondiisocyanat), 1-Methyl-2,4-diisocyanatocyclohexan, 4,4-Diisocyanatodicyclohexylmethan, 4,4'-Diisocyanato-3,3-dimethyl-diphenyl, 2,6-Diisocyanatotoluol, 2,4-Diisocyanatotoluol sowie dessen technische Gemische mit 2,6-Diisocyanatotoluol, 1,5-Diisocyanatonaphthalin, 4,4'-Diisocyanatodiphenylmethan sowie technische Gemische verschiedener Diisocyanatodiphenylmethane, wie der 4,4'- und 2,4'-Isomeren, urethanisiertes 4,4'-Diisocyanatodiphenylmethan, carbodiimidisiertes 4,4'-Diisocyanatodiphenylmethan, das Uretdion des 2,4-Diisocyanatotoluols, Triisocyanatotriphenylmethane, das Adukt aus Diisocyanatotoluol und Trimethylpropan, das Trimerisat aus Diisocyanatotoluol, Diisocyanato-m-xylol oder N,N'-Di-(4-methyl-3-isocyanatophenyl)harnstoff eingesetzt werden.

Gegebenenfalls können die härtbaren Gemische aus den erfindungsgemäss vorverlängerten Epoxidharzen und Härtern auch Härtungsbeschleuniger, wie beispielsweise tertiäre Amine, gegebenenfalls substituierte Imidazole oder Komplexe von Aminen mit Bortrifluorid oder -chlorid, enthalten.

Weitere geeignete Härtungsbeschleuniger sind Phosphorsäuren und Sulfonsäuren. Besonders geeignet sind die erfindungsgemässen vorverlängerten Epoxidharze als Innenlacke für Lebensmittelbehälter, wie beispielsweise Konservendosen oder Getränkedosen, und allgemein als Ersatzprodukte für PVC-Lacke ("Organosole").

Gegenstand vorliegender Erfindung ist somit auch die Verwendung der vorverlängerten Epoxidharze zusammen mit Härtungsmitteln zur Herstellung von Formstoffen oder Beschichtungen, insbesondere für Oberflächenbeschichtungen.

Eine weitere Anwendungsmöglichkeit ist die Verwendung als alleiniges Bindemittel (lufttrocknende Primer).

Je nach dem gewünschten Anwendungszweck formuliert man die erfindungsgemässen vorverlängerten Epoxidharze mit dem entsprechenden Härtungsmittel. Zusätzlich kann man die Harz/Härterformulierungen vor der Härtung mit üblichen Modifikationsmitteln, wie Füllstoffen und Verstärkungsmitteln, Pigmenten, Farbstoffen und Verdünnungsmitteln vermischen, wie beispielsweise Cellulose, Glimmer, verschiedene Quarzmehle, Quarzgläser, Silikate, Silane, Magnesium- und Calciumcarbonat, Bentonite, Kieselsäureaerogel (Aerosil®), Lithopone, Baryt, Titandioxid, Russ, Graphit, Eisenoxid oder Metallpulver, wie Aluminium- oder Eisenpulver. Auch kann man weitere übliche Zusatzstoffe, beispielsweise Thixotropiemittel, Verlaufmittel, wie Silikone, Celluloseacetobutyrat, Polyvinylbutyral, Wachse und Stearate zu den härtbaren Formulierungen zugeben.

Die Härtung der oben angegebenen Formulierungen kann bei Raumtemperatur oder bei erhöhter Temperatur, beispielsweise bis etwa 250°C, vorgenommen werden und hängt bekanntlich vom verwendeten Härtungsmittel ab. Bei Verwendung von Di- bzw. Polyisocyanaten kann die Härtung der vorverlängerten Bisphenol A-diglycidylether auch bei Raumtemperatur durchgeführt werden.

Der Ausdruck "Härtung" bedeutet hier die Umwandlung der oben angegebenen Formulierungen in unlösliche und unschmelzbare Produkte unter gleichzeitiger Verformung zu Flächengebilden, wie Beschichtungen, Einbrennlacken oder Verklebungen.

Vorzugsweise werden die erfindungsgemässen vorverlängerten Epoxidharze für den Oberflächenschutz eingesetzt Die aus den vorverlängerten Epoxidharzen hergestellten Lacke weisen den Vorteil auf, dass ihre Verformbarkeit in weiten Grenzen variiert werden kann.

**Beispiele:**

Beispiele 1-12: feste vorverlängerte Epoxidharze mit geringem Lösungsmittelgehalt

Allgemeine Vorschrift zur Herstellung der vorverlängerten Epoxidharze:

Das Basisharz (Komponente a) wird in einen Planschliffkolben eingewogen, der mit Rührer, Rückflusskühler und Thermosonde mit elektrischem Relais versehen ist. Die entsprechende Menge Lösungsmittel (Komponente d) wird hinzugefügt und homogen verrührt. Die Gesamtmenge des einzusetzenden Bisphenol A (Komponente b) wird in drei gleich grosse Portionen unterteilt. Die erste Portion Bisphenol A wird sofort in das Reaktionsgemisch eingerührt. Der in 2-3 ml Ethanol gelöste Vorverlängerungskatalysator (Komponente c) wird hinzugegeben und homogen verrührt. Anschliessend wird die Reaktionsmischung langsam auf 175 °C aufgeheizt. Bei ca. 140-150 °C setzt die exotherme Reaktion ein. Sobald eine Innentemperatur von 175 °C erreicht ist, wird die zweite und 10 Minuten später die dritte Portion Bisphenol A eingerührt.

Nach ca. 3 h Reaktionszeit bei 175 °C mit Rühren unter Rückfluss und gelegentlicher Epoxytitration von Proben des Reaktionsgemisches ist der Endwert erreicht. Gegebenenfalls wird nach Beendigung der Reaktion ein zweites Lösungsmittel (Komponente d) hinzugegeben.

Das Reaktionsgemisch wird in eine flache Edelstahlschale gegossen und nach dem Erkalten mit einem Hammer zerkleinert.

Die Charakterisierung des Reaktionsproduktes erfolgt durch Epoxytitration, visuelle Farbbeurteilung und gegebenenfalls durch Viskositätsmessungen (20 Gew.-% in Butylcarbitol bei 25 °C, Hoeppler-Viskosimeter).

Die Lagerstabilität wird mit einem speziellen Sintertest bei 40 °C und 50 °C (24 h, mit praxisnaher Belastung) beurteilt.

Dabei wird ein Messzylinder bis zur 100 $cm^3$-Marke mit dem Harz gefüllt. Anschliessend wird das Harz mit einem Zylinder belastet, der mit Bleikügelchen gefüllt ist, so dass die Belastung 490 Pa beträgt. Die Proben werden dann bei 40 °C bzw. 50 °C gelagert. Nach 24 h wird das Gewicht entfernt und die Proben auf ihre Rieselfähigkeit (ihre Tendenz zum Zusammenbacken) untersucht. Die Klassifizierung erfolgt nach der sechsstufigen Notenskala gemäss DIN 53230:

0 - voll rieselfähig, ohne jede Knollenbildung;

1 - Material fliesst erst nach Klopfen am Messzylinder aus (meist verbunden mit minimaler Knollenbildung);

2 - Material fliesst nicht mehr frei aus (auch nach Klopfen), grosse Agglomerate, jedoch leicht redispergierbar;

3 - grosse Agglomerate, noch redispergierbar;

4 - grosse Agglomerate, nicht mehr redispergierbar;

5 - zusammenhängender Sinterklumpen.

Die Zusammensetzungen der Beispiele 1-12 und die Eigenschaften der vorverlängerten Harze sind in Tabelle 1 zusammengefasst.

Als Basisharz (Komponente a) wird in sämtlichen Beispielen ein Bisphenol A-diglycidylether mit einem Epoxidgruppengehalt von 5,37 val/kg eingesetzt.

Als Vorverlängerungskatalysatoren (Komponente c) werden folgende Verbindungen verwendet:

AVA-Katalysator A: N-Ethyl-N-Methylpiperidiniumiodid

AVA-Katalysator B: 2-Phenylimidazol.

Beispiele 13-24: Lösungen von vorverlängerten Epoxidharzen mit eingebauten Flexibilisatoren (Polymergehalt 30-50 Gew.-%)

Analog zum oben beschriebenen Verfahren werden aus einem Basisharz (Bisphenol A-diglycidylether mit einem Epoxidgruppengehalt von 5,38 val/kg), einer aromatischen Dihydroxyverbindung, gegebenenfalls in Kombination mit einem Flexibilisator, einem AVA-Katalysator und 7-15 Gew.-%, bezogen auf die Gesamtzusammensetzung, eines spezifischen Lösungsmittels vorverlängerte Epoxidharze hergestellt. Im Unterschied zu den Beispielen 1-12 wird nach beendeter Vorverlängerungsreaktion jedoch eine grössere Menge eines zweiten Lösungsmittels zugegeben, so dass Lösungen mit einem Polymergehalt von 30-50 Gew.-% resultieren. Als AVA-Katalysatoren werden die gleichen Verbindungen wie in den Beispielen 1-12 eingesetzt. Die Zusammensetzungen der Beispiele 13-24 und die Eigenschaften der Lösungen sind in Tabelle 2 dargestellt.

Tabelle 1: Vorverlängerte Epoxidharze mit geringem Lösungsmittelgehalt (in Schuppenform zubereitet, Polymergehalt 85-93 %)

| Beispiel | 1 | 2 | 3 | 4 | 5 | 6 | 7 | 8 | 9 | 10 | 11 | 12 |
|---|---|---|---|---|---|---|---|---|---|---|---|---|
| Basisharz [g] | 300 | 500 | 600 | 300 | 300 | 300 | 300 | 300 | 300 | 300 | 300 | 300 |
| Bisphenol A [g] | 182,7 | 304,2 | 365,4 | 182,7 | 182,7 | 182,7 | 182,7 | 182,7 | 182,7 | 182,7 | 165,6 | 198,0 |
| AVA-Katalysator A [mg] | 240 | 400 | 480 | 240 | 240 | 240 | 240 | | | 240 | 180 | 270 |
| AVA-Katalysator B [mg] | | | | | | | | 45 | 60 | | | |
| Lösungsmittel [g] | | | | | | | | | | | | |
|   Cyclohexanon | 36,3 | 90,0 | 145,0 | 53,6 | | | 53,6 | 53,6 | 72,2 | | 35,0 | 55,3 |
|   Methylcyclohexanon | | | | | | | | | | 53,6 | | |
|   Diisobutylketon *) | | | | | 53,6 | | | | | | | |
|   Mesitylen | | | | | | 53,6 | | | | | | |
| Reaktionszeit [h] | 2:20 | 3:10 | 3:20 | 3:20 | 3:10 | 4:00 | 3:10 | 3:10 | 2:20 | 3:10 | 3:10 | 3:20 |
| zweites Lösungsmittel [g] **) | | | | | | | | | | | | |
|   Cyclopentanon | | | | 18,6 | | | | | | | | |
|   Methylisobutylketon | | | | | | | 31,5 | | | | | |
| Gesamtlösungsmittelgehalt | 7,0 % | 10 % | 13 % | 13 % | 10 % | 10 % | 15 % | 10 % | 13 % | 10 % | 7 % | 10 % |
| Epoxidgruppengehalt [val/kg] | 0,14 | 0,15 | 0,15 | 0,15 | 0,15 | 0,19 | 0,14 | 0,13 | 0,13 | 0,15 | 0,32 | 0,06 |
| Viskosität [mPa·s] | | 240 | | | | | | 290 | 300 | | 250 | 230 |
| Sintertest: 24 h, 40 °C | 0 | 0 | 0 | 0 | 0 | 0 | 4 | 0 | 0 | 0 | 0 | 0 |
|     24 h, 50 °C | 0 | 0 | 4 | 4 | 1 | 0 | | 0 | 1 | 1 | 2 | 0 |
| Farbe | gelbl. | fast farblos | fast farblos | fast farblos | fast farblos | bräunl. | gelbl. | gelbl. | fast farblos | fast farblos | gelbl. | gelbl. |

*) Handelsprodukt der Firma Fluka, enthält ca. 25 % des isomeren 2,4-Dimethyl-6-heptanons
**) Zugabe nach Ende der Vorverlängerungsreaktion

EP 0 555 181 A1

Tabelle 2: Lösungen von vorverlängerten Epoxidharzen mit eingebauten Flexibilisatoren (Polymergehalt 30-50 Gew.-%)

| Beispiel | 13 | 14 | 15 | 16 | 17 | 18 | 19 | 20 | 21 | 22 | 23 | 24 |
|---|---|---|---|---|---|---|---|---|---|---|---|---|
| Basisharz [g] | 300 | 300 | 450 | 285 | 270 | 255 | 285 | 285 | 240 | 300 | 300 | 300 |
| Bisphenol A [g] | 182 | 182 | 257 | 182 | 183 | 182 | 182 | 182 | 182 | 160 | 147 | 165 |
| Bisphenol S [g] | | | | | | | | | | 12 | | |
| Adipinsäure [g] | | | | | | | | | | | | |
| Sebacinsäure [g] | | | | | | | | | | | | |
| 1,4-Butandioldiglycidylether [g] | | | | 9 | 21 | 27 | | | | 6 | 24 | 17 |
| 1,6-Hexandioldiglycidylether [g] | | | 30 | | | | | | | | | |
| Adipinsäurediglycidylester [g] | | | | | | | 11 | 14 | 43 | | | |
| Sebacinsäurediglycidylester [g] | | | | | | | | | | | | 17 |
| AVA-Katalysator A [mg] | 240 | 240 | 180 | 240 | 240 | 240 | 240 | 240 | 240 | 70 | 240 | 240 |
| AVA-Katalysator B [mg] | | | | | | | | | | | | |
| Cyclohexanon [g] | 54 | 54 | 37 | | 52 | 52 | | 53 | 52 | 53 | 52 | 54 |
| Methylcyclohexanon [g] | | | | 54 | | | | | | | | |
| Diisobutylketon *) [g] | | | | | | | 53 | | | | | |
| Reaktionszeit [h] | 3:00 | 3:00 | 3:00 | 3:15 | 3:00 | 3:30 | 3:00 | 3:00 | 2:30 | 3:30 | 3:30 | 3:00 |
| Methylisobutylketon **) [g] | 39 | 670 | 600 | 661 | 658 | 645 | 664 | 667 | 300 | 260 | 653 | 668 |
| 1-Methoxypropylacetat **) [g] | 390 | | | | | | | | 346 | 600 | | |
| Ethylmethylketon **) [g] | | | | | | | | | | 200 | | |
| Polymergehalt [Gew.-%] | 50 | 40 | 50 | 40 | 40 | 40 | 40 | 40 | 40 | 30 | 40 | 40 |
| Epoxidgehalt [val/kg] | 0,15 | 0,12 | 0,59 | 0,15 | 0,15 | 0,14 | 0,15 | 0,15 | 0,15 | 0,15 | 0,15 | 0,15 |
| Viskosität der Lösung [mPa·s] | 3450 | 3500 | 2300 | 3600 | 2250 | 2920 | 2100 | 1960 | 1940 | 1200 | 3100 | 2490 |
| MG-Verteilung $M_w/M_n$ | 4,3 | 3,3 | | 2,8 | 3,7 | 3,6 | 3,8 | 3,1 | 3,8 | 3,9 | | 3,8 |

*) Handelsprodukt der Firma Fluka, enthält ca. 25 % des isomeren 2,4-Dimethyl-6-heptanons
**) Zugabe nach Ende der Vorverlängerungsreaktion

Anwendungsbeispiel:

Durch Mischen der folgenden Bestandteile wird ein Dosenlack hergestellt, der in bekannter Weise auf Alumi-

nium (Al) und Weissblech (WB) appliziert wird.

| | |
|---|---|
| Harzlözung A: | |
| Harz gemäss Beispiel 2: | 100,0 Gew.-Teile |
| Lösungsmittelgemisch aus 1-Methoxy-2-propanol/1-Methoxy-2-propylacetat/Methylisobutylketon (70:20:10 Gew.-Teile): | 125,0 Gew.-Teile |
| Harzlösung A | 225,0 Gew.-Teile |
| Gebrauchsfertiger Walzlack: | |
| Harzlösung A: | 100,0 Gew.-Teile |
| butyliertes Bisphenol A-Formaldehydharz, 50 %ig in Butanol: | 26,7 Gew.-Teile |
| Lösungsmittelgemisch aus 1-Methoxy-2-propanol/1-Methoxy-2-propylacetat/Methylisobutylketon (70:20:10 Gew.-Teile): | 41,0 Gew.-Teile |
| Gebrauchsfertiger Walzlack: | 167,7 Gew.-Teile |
| Auslaufzeit (DIN-Becher 4,20 °C, DIN 53211): | 70 s |
| Festkörpergehalt: | 31,8 Gew.-% |
| Einbrennbedingungen: | 10 min bei 205 °C |

Die beschichteten Bleche werden einer lacktechnischen Prüfung unterzogen. Die Resultate sind in Tabelle 3 zusammengefasst.

Tabelle 3: Lacktechnische Prüfung

| | Al | WB |
|---|---|---|
| **a) Untergrund Aluminium** | | |
| Filmdicke [$\mu$m] | 15-20 | |
| Gitterschnitt (DIN 53151) | Gt 0 | |
| Schlagprüfung (Schlag auf Rückseite, 2 kp aus 80 cm Höhe, Kugeldurchmesser 2 cm) [1] | 0 (rissfrei) | |
| Tiefung nach ERICHSEN (DIN 53156) | 8,5 mm | |
| Dornbiegeprüfung (Dorn-$\emptyset$ in mm) | 1 [2] | |
| Acetonreibtest 20 ⇌ [1] | 0 (unverändert) | |
| **b) Untergrund Aluminium bzw. Weissblech** | | |
| Filmdicke [$\mu$m] | ca. 4 | ca. 4 |
| Faltschlagtest (ERICHSEN Mod. 471, Länge der Korrosionslinie vom Knickpunkt an [cm]) | 4,0 | 3,6 |
| Näpfchentiefzug (ERICHSEN Mod. 224/II) [1] | 0 | 1 |
| Sicken (Sickenprüfgerät ERICHSEN Mod. 227, Sickentiefe: 0,5 mm) [1] | 0 (unverändert) | 0 (unverändert) |
| Sterilisation (Trinkwasser, 90 min bei 121 °C) [1] | 0 (unverändert) | 0 (unverändert) |

[1] Klassifizierung erfolgt nach der sechsstufigen Notenskala (0-5) gemäss DIN 53230.

[2] Beim Biegen um einen 1 mm-Dorn entstehen keine Risse.

**Patentansprüche**

1. Zusammensetzung enthaltend
   (a) ein Epoxidharz enthaltend durchschnittlich mehr als eine Epoxidgruppe pro Molekül,
   (b) eine aromatische Dihydroxyverbindung,
   (c) einen Vorverlängerungskatalysator und
   (d) 7-15 Gew.-%, bezogen auf die Gesamtzusammensetzung, eines flüssigen Ketons oder eines flüssigen aromatischen Kohlenwasserstoffs mit einem Siedepunkt zwischen 125 °C und 200 °C.

2. Zusammensetzung gemäss Anspruch 1 enthaltend als Komponente (a) eine Diglycidylverbindung mit einem Molekulargewicht unter 3500.

3. Zusammensetzung gemäss Anspruch 1 enthaltend als Komponente (a) einen Diglycidylether eines Bisphenols.

4. Zusammensetzung gemäss Anspruch 1 enthaltend als Komponente (a) Bisphenol A-diglycidylether.

5. Zusammensetzung gemäss Anspruch 1 enthaltend als Komponente (b) ein Bisphenol.

6. Zusammensetzung gemäss Anspruch 1 enthaltend als Komponente (b) Bisphenol A

7. Zusammensetzung gemäss Anspruch 1 enthaltend als Komponente (c) ein sekundäres oder tertiäres Amin oder ein quartäres Ammoniumsalz.

8. Zusammensetzung gemäss Anspruch 1 enthaltend als Komponente (c) ein Dialkylpiperidiniumsalz, Dialkylpyrrolidiniumsalz, Dialkylmorpholiniumsalz, N-Alkylmorpholin, N-Alkylpiperidin, N-Alkylpyrrolidin oder ein alkyl- oder arylsubstituiertes Imidazol.

9. Zusammensetzung gemäss Anspruch 1 enthaltend als Komponente (c) N-Ethyl-N-Methylpiperidiniumiodid oder 2-Phenylimidazol.

10. Zusammensetzung gemäss Anspruch 1 enthaltend als Komponente (d) ein oder mehrere Lösungsmittel ausgewählt aus der Gruppe bestehend aus Cyclohexanon, Methylcyclohexanon, Cyclopentanon, Methylcyclopentanon, Diisobutylketon, Methylisobutylketon und Mesitylen.

11. Zusammensetzung gemäss Anspruch 1 enthaltend als Komponente (d) Cyclohexanon.

12. Zusammensetzung gemäss Anspruch 1 enthaltend die Komponente (b) in einer solchen Menge, dass auf ein Epoxidäquivalent der Komponente (a) 0,6-1,2 OH-Gruppen-äquivalente entfallen.

13. Zusammensetzung gemäss Anspruch 1 enthaltend 10-6000 ppm der Komponente (c), bezogen auf die Menge der Komponente (a).

14. Verfahren zum Vorverlängern eines bei Raumtemperatur flüssigen Epoxidharzes, dadurch gekennzeichnet, dass man eine Zusammensetzung gemäss Anspruch 1 auf 160-200 °C erhitzt, bis der Epoxidgehalt des Harzes 0,05-0,35 val/kg beträgt.

15. Festes vorverlängertes Epoxidharz mit einem Lösungsmittelgehalt von 7-15 Gew.-% erhältlich durch Erhitzen einer Zusammensetzung gemäss Anspruch 1 auf 160-200 °C bis der Epoxidgehalt des Harzes 0,05-0,35 val/kg beträgt oder durch Erhitzen einer Zusammensetzung enthaltend die Komponenten (a)-(c) gemäss Anspruch 1 und mindestens 50 % der vorgesehenen Gesamtlösungsmittelmenge auf 160-200 °C, bis der Epoxidgehalt des Harzes 0,05-0,35 val/kg beträgt und anschliessender Zugabe des restlichen Lösungsmittels.

16. Verwendung der vorverlängerten Epoxidharze gemäss Anspruch 15 zusammen mit Härtungsmitteln zur Herstellung von Formstoffen oder Beschichtungen, insbesondere für Oberflächenbeschichtungen.

EP 0 555 181 A1

| | Europäisches Patentamt | EUROPÄISCHER RECHERCHENBERICHT | Nummer der Anmeldung |
| | | | EP   93 81 0056 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X,Y | FR-A-2 131 981 (SHELL) <br> * Seite 2, Zeile 31 - Seite 3, Zeile 31 * <br> * Seite 5, Zeile 30; Ansprüche * <br> * Seite 6, Zeile 13 - Zeile 26 * <br> --- | 1-16 | C08G59/06 |
| Y | EP-A-0 132 789 (DOW) <br> * Seite 13, Zeile 9 - Zeile 20; Ansprüche * <br> --- | 1-16 | |
| D,A | EP-A-0 314 619 (CIBA-GEIGY) <br> * Ansprüche * <br> --- | 1,7-9 | |
| D,A | EP-A-0 362 140 (CIBA-GEIGY) <br> * Ansprüche * <br> --- | 1,7-9 | |
| D,A | EP-A-0 362 138 (CIBA-GEIGY) <br> * Ansprüche * <br> ----- | 1,7-9 | |
| | | | **RECHERCHIERTE SACHGEBIETE (Int. Cl.5 )** <br><br> C08G |

Der vorliegende Recherchenbericht wurde für alle Patentansprüche erstellt

| Recherchenort | Abschlußdatum der Recherche | Prüfer |
|---|---|---|
| DEN HAAG | 03 MAI 1993 | DERAEDT |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
..................................................................
& : Mitglied der gleichen Patentfamilie, übereinstimmendes
Dokument

EPO FORM 1503 03.82 (P0403)

12